# EUROPEAN PATENT SPECIFICATION

(11) **EP 1 956 513 B1**
(45) Date of publication and mention of the grant of the patent: **02.06.2010**
(21) Application number: 07018067.4
(22) Date of filing: 14.09.2007
(51) Int. Cl.: G06K 7/00

(54) **Transmission protocol opening a dynamic window for receiving data**
Übertragungsprotokoll zur Öffnung eines dynamischen Fensters für Datenempfang
Protocole de transmission ouvrant une fenêtre dynamique pour recevoir des données

(30) Priority: 07.02.2007 EP 07002606
(43) Date of publication of application: 13.08.2008
(73) Proprietor: Albis Technologies AG, 8047 Zürich (CH)
(72) Inventor: Desjeux, Olivier, 2525 Le Landeron (CH)
(74) Representative: Kley, Hansjörg

(56) References cited:
- EP-A- 1 619 602
- EP-B- 1 210 693
- US-A1- 2004 066 281
- US-A1- 2005 179 521

## Description

This invention relates to a method of operating a wireless transceiver device that communicates with wireless identification tags according to claim 1.

The present invention covers the field of portable RFID-devices as «active tags» and their protocols. A typical RFID-System is disclosed in WO 1996/028941 A1 [1], especially of «active tags».

Usual embodiments of these tags and their wireless transceiver device (sometimes only called «reader» ) comprise:
- Microwave 2.45 GHz operation in the ISM-Band; other, lower or higher frequencies can be used according to the RF-regulations;
- 4 years autonomy , up to 10 years, configuration dependant;
- typical 80 - 100 tags per second operation, configuration dependant;
- badge holder : IS07816, 4mm thick.

Active tags features suffer from strong penalty on autonomy when it comes to writing data inside the tag's memory. Likewise, a tag that requires receiving commands is also penalized due to the strong current consumption in reception mode.

The state of the art is to turn on the receive section of the active tag with a certain duty cycle, and wait until a command is received to either store data into the memory or activate the command inside the internal program or state machine of the tag. If the duty cycle is to large, the energy consumption is not to important, but the time it takes to have the command interpreted by the tag may be prohibitive. Also, with a long duty cycle the reader needs to send his command repeatedly many times. Other active tags are not able to send their information during this reader transmission time.

Tags are operating at a very high data rate, like 256 Kbps, 1 Mbps or more. Such data rate can be achieved in frequency spectrum allowing such bandwidth, like the unlicensed 2.45 GHz frequency band. Pulse shaping is however suggested in order to keep the spectrum of the transmission contained in reasonable span.

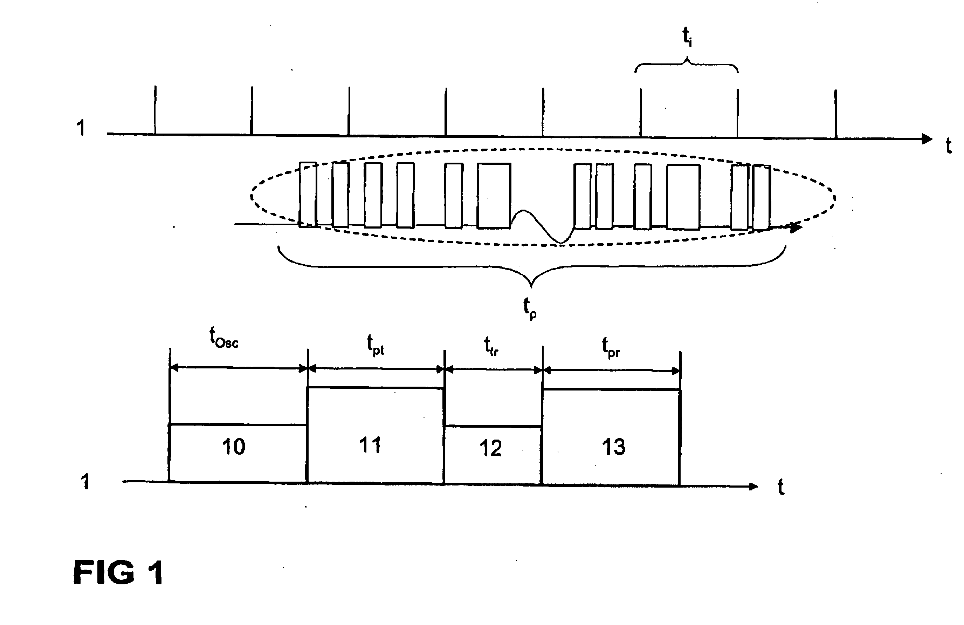

Payload of transmission and reception is very small, like 64 bits plus control bits like preamble and checksum. So the total air-time of the payload is in the range of 150µs. This situation is depicted in Figure 1: In the upper part a tag 1 sends out its tag identity ID in intervals of the interframe time ti; range of ti = 1s .. 3s. The lower part shows the sequence on a tag with:
- Oscillator setup 10 of a duration t_{osc}; the oscillator starts every ti;
- transmitting the tag ID at a frequency f1, denoted by the reference numeral 11; this is called «payload transmit» 11;
- turn-around 12 of a duration tₜᵣ ; the tag 1 automatically opens a short receive window after the ID transmission. The turnaround time tₜᵣ is set by construction, and known by the reader.
- receiving an addressed message at a frequency f2, denoted by the reference numeral 13.

The document EP 1 210 693 B1 [2] discloses a method for registering tickets. In this context a ticket represent according to its function an active tag. In order to reduce the energy consumption and to improve the autonomy the ticket receives in a sleep mode at a low frequency (near field) a wake up message, which activates a second receiver in the ticket. The said message contains further a timing information defining the start and the interval length for an intermittent operation. After some cycle of no transmission the ticket falls asleep.

The above disclosed method and tickets suffer from the drawbacks:
- powerful but expensive;
- requires two frequencies, a lower frequency for the wake up procedure, a higher frequency for the bidirectional communication;
- relatively complicate communication protocol;
- near field communication from reader to the ticket.

US 2004/0066281 A1 [5] which forms the preamble of claim 1, discloses a method for identifying a plurality of RFID tags in a reader/tag system. Each tag has the capability to reply on any of a number of frequencies. A pattern is generated in each of the tags that the reader can recognize during a timeslot. An advantage of this method is that a simple tag response is all that is required for the reader to gain information about the identity of the corresponding tag. The tags do not need to present their entire IDs. Thus, the time required for determining the presence of tags can be reduced significantly.

The object of the present invention is to overcome the problems presented by the above cited devices and protocols and to provide a communication protocol which enables a communication with short time for interpreting a command by a tag without increasing the duty cycle which causes a higher energy consumption.

This object is solved by a method specified in claim 1 operating a wireless transceiver device that communicates with wireless identification tags.

Further advantageous embodiments are given in dependent claims.

The invention will be now described in a preferred embodiment with reference to the accompanying drawings wherein:
- Figure 1: Communication sequence according to the state of the art ;
- Figure 2: Communication sequence according to a first embodiment of the invention;

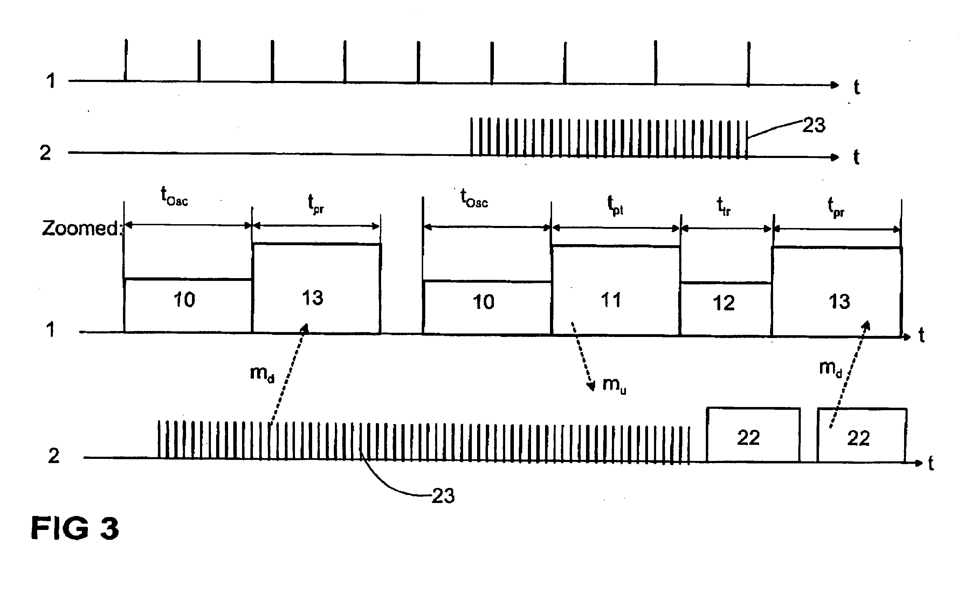

- Figure 3: Communication sequence according to a second embodiment of the invention.

As already pointed out above, payload of transmission and reception is very small, like 64 bits plus some control bits like preamble and checksum. In order to save energy the receive window can be limited to, for example, 200µs every 2s. So the energy is averaged over a duty cycle very small, like below 1/1000. This kind of operation is called an intermittent operation. In case the beginning of a message is detected during this receive window, the size of the window shall be expanded in order to receive the full message. The reader 2 sends data, e.g. messages m_{d} on the receive frequency f2 of the tags 1 . The reader 2 receive frequency is on the tag send frequency f1.

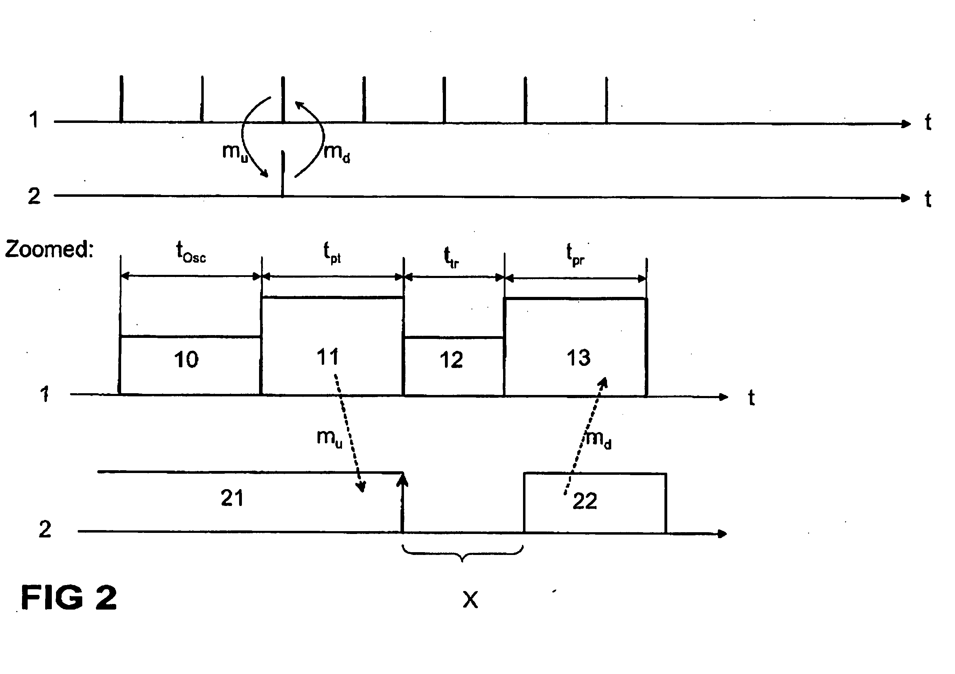

This situation is depicted in figure 2 as follows:

The reader 2 is in permanent receive mode on frequency f1, denoted by a line with the reference numeral 21. As soon as it receives the tag ID mᵤ, it sends back the addressed command m_{d} to the tag 1 at frequency f2, denoted by the reference numeral 22; see figure 2. The beginning of the addressed command needs to fall into the synchronized time slot of the tag 1 otherwise it is not received. The command size may exceed the initial receive timeslot duration tₚᵣ of the tag 1. The duration of the interval X is determined in order to be synchronized with the receive window of the tag 1: X is an interval between the end of the reception of the tag transmission (synchronization) and the command sent by the reader 2 to the tag 1. X needs to be coherent with turn-around time t_{tr.}

### Figure 3

The tag 1 is in its usual duty cycle. For simplicity of representation, the wake-up command is represented as an example: the tag 1 only activates the receive mode at a certain duty cycle; this is also called an intermittent receive mode. The reader 2 sends a burst 14 of commands with broadcast address. The quantity of frame transmission during the bursts must cover at least two times the maximum interval of tag oscillator setup time t_{osc} plus reception window duration: t_{osc} + t_{pr.} When the tag 1 receives the command, during t_{pr,} it interprets the command. If the command duration is longer than the original receive duration of the tag, tₚᵣ, the tag extends this duration in order to capture the full command. In this case it switches to the activated mode: the tag transmits its ID at frequency f1 during t_{pt,} and keeps on listening at frequency f2 during a very short duration tₚᵣ. The other messages received by the tag are discarded.

A wake-up command is either broadcast to all tags 1, either addressed. Once a tag 1 is woken-up, it transmits its ID only - called unique address - based on the pre-determined duty cycle. The transmission time and duty cycle calculation is similar to the one in receive mode.

After each transmission at frequency f1, the tag opens a receive window at frequency f2. The total duration of this operation is calculated with: Local-oscillator switch on time t_{osc}, transmit data time tₚₜ, turn-around time tₜᵣ, receive data tₚᵣ.

The receive window has a fixed duration if no message is received. In case of reception, the duration of the window is adapted to the message to be received. Because the turn-around time tₜᵣ is precisely known, the reader 2 can send a command precisely in the receive window, if necessary. This synchronism mechanism leaves the tag 1 in very low average current consumption mode. In case of a wake-up with a broadcast command, the tags 1 need to wake-up at different times to avoid collisions. This time difference offset is calculated with the unique serial number of the tag. Afterwards, the duty cycle is assumed to be low enough to accept synchronised transmissions with still an acceptable number of tags 1 in the range.

The duty cycle can be a parameter of the wake-up command, or can be a command sent during the operation of the tag 1. Assuming a transmit time of 150µs, and a separation of 100µs between two tag transmissions to avoid collisions, a total of 8000 slots are opened, the 13 bits serialised can be used to calculate the slot number (8192 combinations). In the case where each tag 1 is set independently, the duty cycle shall be adjusted in order to maintain the probability of collisions very low. The duty cycle can be adapted dynamically with the appropriate command sent during the reception time.

The teachings in the application WO 97/17667 [3] and in the patent US 6,154,136 [4] may be used to increase the anti-collision performance if appropriate.

### List of reference numerals

- 1: wireless identification tag; tag
- 2: transceiver device, reader
- 10: Oscillator setup
- 11: Payload transmit Tag Tx on frequency f1
- 12: turn-around
- 13: Payload receive Tag Rx on frequency f2
- 21: Permanent receive on frequency f1
- 22: Transmit command Tx on f2
- 23: Burst of repeated messages. Each message contains an address and a command, which are sent to the tag
- f1: Frequency for transmission tag → reader
- f2: Frequency for transmission reader → tag
- mᵤ: message tag -> reader, up-link; message with tag ID
- m_{d}: message reader -> tag, down-link; message with command
- ti: interframe time, ti = 1s .. 30s
- t_{Osc}: Oscillator setup time
- tp: payload duration; typically 150 µs
- tₚᵣ: payload time transmit on f1; tₚᵣ = 150 .. 180µs
- tₚₜ: payload time receive on f2; tpt = 150 .. 180µs
- tₜᵣ: turn-around time
- x: Interval between the end of the reception of the tag transmission (synchronization) and the command sent by the reader to the tag; coherent with turn-around time tₜᵣ.

### List of symbols

- ISM: Industrial, Scientific and Medical; ISM band
- RFID: Radio Frequency IDentification
- ID: IDentity

### References

[1] WO 1996/028941 A1
   «Radio Frequency Idendification System for reliable Communication»
   Motorola Inc., Schaumburg, IL 60196 US.
[2] EP 1 210 693 B1
   «Method and System for registering tickets» Siemens Transit Telematic Systems AG CH - 8212 Neuhausen.
[3] WO 97/17667 A1
   «Enhanced Detection of multiple data transmissions» British Technology Group Limited; London SE1 6BU (GB)
[4] US 6,154,136
   «Free Running RF identification sysem with increasing average inter transmission intervals» Hendrik Lodewyk Van Edden 0044 Gauteg Province, ZA
[5] US 2004/0066281 A1
   «System and method to identifiy multiple RFID Tags» Hughes et al.

## Claims

1. A method for communication between a wireless transceiver device (2) and a plurality of wireless identification tags (1); where the wireless transceiver device (2) is called a reader (2) and each wireless identification tag (1) is called a tag (1) the method comprising the steps of:
A operating the reader (2) in a permanent receive mode (21) at a first frequency (f1);
B opening a receive window for a fixed duration in the tag (1), if no message from the reader (2) is received;
C after reception by the reader (2) of a first message (11, mᵤ, 21) at the first frequency (f1) containing an address defining the identity of a tag (1) sending from the reader a second message (22, m_{d}) at a second frequency (f2) containg the said identity of the tag (1) and a command;
**characterised by** the step of
D extending in the tag (1) the duration of its receive window (13) after reception of the second message (22, m_{d}) containing the address defining the identity of said tag (1) in order to receive the full length of said message (m_{d}).

2. Method according to claim 1;
**characterised by**
operating the tag (1) in an intermittent receive mode (tᵢ; 13) in step C when the reader (2) sends bursts of messages (23, md, 13) containing a broadcast address in order to enable a reception of a message (md) of said bursts of messages (14).

3. Method according to claim 1;
**characterised by**
operating the tag (1) in an intermittent receive mode (tᵢ; 13) in step C when the reader (2) sends bursts of messages (23, md, 13) containing an unique address in order to enable a reception of a message (md) of said bursts of messages (14).

4. Method according to any one of the claims 1 to 3;
**characterised in that**
in step A the tag (1) sends a message (mᵤ) containing its address after reception of a message (md) containing a broadcast address.

## Patentansprüche

1. Verfahren für das Kommunizieren zwischen einem Transceiver-Funkgerät (2) und mehreren Funkerkennungs-Tags (1),
wobei das Transceiver-Funkgerät (2) als Lesegerät (2) und jedes Funkerkennungs-Tag (1) als Tag (1) bezeichnet wird und das Verfahren folgende Schritte umfasst:
A Betreiben des Lesegeräts (2) im Dauerempfangsmodus (21) auf einer ersten Frequenz (f1),
B Öffnen eines Empfangsfensters im Tag (1) für eine festgelegte Dauer, wenn keine Nachricht vom Lesegerät (2) empfangen wird,
C Senden einer zweiten Nachricht (22, m_{d}) durch das Lesegerät (2), die die Kennung des Tags (1) und einen Befehl enthält, auf der zweiten Frequenz (f2), wenn das Lesegerät auf der ersten Frequenz (f1) eine erste Nachricht (11, mᵤ, 21) empfangen hat, die eine die Kennung eines Tags (1) definierende Adresse enthält,
**gekennzeichnet durch**
D das Verlängern der Dauer des Empfangsfensters (13) im Tag (1) nach Empfang der zweiten Nachricht (22, m_{d}), welche die die Kennung des Tags (1) definierende Adresse enthält, damit die gesamte Länge der Nachricht (m_{d}) empfangen werden kann.

2. Verfahren nach Anspruch 1,
**gekennzeichnet durch**
das Betreiben des Tags (1) in einem intermittierenden Empfangsmodus (tᵢ, 13) in Schritt C, wenn das Lesegerät (2) Nachrichtenbündel (23, m_{d}, 13) sendet, die eine Rundsendeadresse enthalten, damit eine Nachricht (m_{d}) aus dem Nachrichtenbündel (14) empfangen werden kann.

3. Verfahren nach Anspruch 1,
**gekennzeichnet durch**
das Betreiben des Tags (1) in einem intermittierenden Empfangsmodus (tᵢ, 13) in Schritt C, in dem das Lesegerät (2) Nachrichtenbündel (23, m_{d}, 13) sendet, die eine eindeutige Adresse enthalten, damit eine Nachricht (m_{d}) aus dem Nachrichtenbündel (14) empfangen werden kann.

4. Verfahren nach einem der Ansprüche 1 bis 3,
**dadurch gekennzeichnet, dass**
das Tag (1) in Schritt A nach dem Empfang einer Nachricht (m_{d}), die eine Rundsendeadresse enthält, eine Nachricht (mᵤ) sendet, die seine Adresse enthält.

## Revendications

1. Procédé de communication entre un dispositif ( 2 ) émetteur-récepteur sans fil et une pluralité d'étiquettes ( 1 ) d'identification sans fil ;
dans lequel le dispositif ( 2 ) émetteur-récepteur sans fil est appelé un lecteur ( 2 ) et chaque étiquette ( 1 ) d'identification sans fil est appelée une étiquette, le procédé comprenant les stades dans lesquels :
A on fait fonctionner le lecteur ( 2 ) dans un mode ( 21 ) de réception permanente à une fréquence ( f1 ) ;
B on ouvre une fenêtre de réception pour une durée fixe dans l'étiquette ( 1 ) si on ne reçoit pas de message du lecteur ( 2 ) ;
C après réception par le lecteur ( 2 ) d'un premier message ( 11, mᵤ, 21 ) à la première fréquence ( f1 ) contenant une adresse définissant une identité d'une étiquette ( 1 ), on envoie par le lecteur un deuxième message ( 22, md ) à une deuxième fréquence ( f2 ) contenant ladite identité de l'étiquette ( 1 ) et une instruction ;
**caractérisé par** le stade dans lequel
D on augmente dans l'étiquette la durée de sa fenêtre ( 13 ) de réception après réception du deuxième message ( 22, m_{d} ) contenant l'adresse définissant l'identité de ladite étiquette ( 1 ) afin de recevoir toute la longueur de ce message ( m_{d} ).

2. Procédé suivant la revendication 1,
**caractérisé en ce que**
on fait fonctionner l'étiquette ( 1 ) dans un mode ( ti ; 13 ) de réception intermittent dans le stade C lorsque le lecteur ( 2 ) envoie des paquets de messages ( 23, md, 13 ) contenant une adresse de diffusion, afin de permettre une réception d'un message ( md ) composé desdits paquets de messages ( 14 ).

3. Procédé suivant la revendication 1,
**caractérisé en ce que**
on fait fonctionner l'étiquette ( 1 ) dans un mode ( tᵢ ; 13 ) de réception intermittent dans le stade C lorsque le lecteur ( 2 ) envoie des paquets de messages ( 23, md, 13 ) contenant une adresse unique afin de permettre une réception d'un message ( md ) composé desdits paquets de messages ( 14 ).

4. Procédé suivant l'une quelconque des revendications 1 à 3,
**caractérisé en ce que**
dans le stade A l'étiquette ( 1 ) envoie un message ( mᵤ ) contenant son adresse après réception d'un message ( md ) contenant une adresse de diffusion.
